# EUROPEAN PATENT SPECIFICATION

(11) **EP 2 049 212 B1**
(45) Date of publication and mention of the grant of the patent: **23.03.2011**
(21) Application number: 07719233.4
(22) Date of filing: 05.06.2007
(51) Int. Cl.: A63F 13/00

(54) **SYSTEM FOR SPORT AND ENTERTAINMENT**
SYSTEM FÜR SPORT UND UNTERHALTUNG
SYSTÈME POUR SPORT ET LOISIRS

(30) Priority: 28.07.2006 BG 10963806
(43) Date of publication of application: 22.04.2009
(73) Proprietor: Spasov, Rumen, 1220 Sofia (BG)
(72) Inventor: Spasov, Rumen, 1220 Sofia (BG)
(74) Representative: Pakidanska, Ivanka Slavcheva
(86) International application number: PCT/BG2007/000011
(87) International publication number: WO 2008/011690

(56) References cited:
- WO-A-03/067175
- US-A1- 2002 111 201
- US-A1- 2003 027 103

## Description

### FIELD OF THE INVENTION

The present invention relates to a system for sport and entertainment, which is used as a simulator for dynamic building up of individual and collective psycho-physical reactions, for diagnosing, improvement and/or training of various skills of the participants in game situations, as well as for interactive communication and entertainment in amusement, sports, trade, cultural, financial, tourist and public sites.

### BACKGROUND OF THE INVENTION

EP 1 203 604 discloses an entertainment system, which comprises: entertainment terminal devices each of which selects data necessary for the device to execute a predetermined entertainment process, out of entertainment data delivered to all of the entertainment terminal devices with the same contents at the same time through a broadband broadcast communication line, executes the entertainment process on the basis of the data selected and operation input data obtained from an operation terminal, and then sends out terminal data generated as a result of the execution of the entertainment process to a low-speed communication line; an entertainment data generation apparatus that receives terminal data from all of the entertainment terminal devices through the low-speed communication line, and then generates entertainment data containing data necessary for each of the entertainment terminal devices to execute a predetermined entertainment process on the basis of the terminal data from all of the entertainment terminal devices; and a data delivery machine for delivering the entertainment data to all of the entertainment terminal devices at the same time through the broadband broadcast communication line.

US2002-0111201 discloses a "Laser Tag" type game where the players may "shoot" at targets placed on eachothers bodies, each hit incurring a point or similar.

In this known solution the game situation is not conducted in a real environment; there is no interactive action between or on the participants in real space to provoke reactions; it is impossible to build up psychomotor skills in real environment or communication with an audience.

A game complex of the type of a shooting range is known, which comprises a wall with vertical static or robotized targets and opposite them are positioned air/electronic rifles with visual link to the targets.

This known classical facility of the type of a shooting range registers only a single result when the targets are hit, with a known and expected by the shooter effect, without assessing the time, motives and reaction of his shooting, without instructions to continue his participation in accordance with specified criteria. No data of the individual achievements is compiled and stored. Both the targets and the shooters are immobile, the game situation is repetitive and unvaried and does not simulate a desire for prolonged participation. It does not afford a possibility for team participation or collaboration between teams located at one or several different places, nor partnership of the participants in a session with an audience and exchange of information with the aim of interaction between them.

### DISCLOSURE OF THE INVENTION

An object of the present invention is to create a system for sport and entertainment, which provides building up and/or testing of the individual reactions of each participant upon result achieved in real environment with unpredictable situations, assesses the time of their reactions, as well as provides for the participation of and interaction between participants in the entertainment, the teams and the audience.

This object is achieved by a system for sport and entertainment, which includes targets and communication devices used by the participants in a session. According to the present invention the targets are controllable robotized targets, each of which has at least one mark, surrounded by an information-indicative background. The controllable robotized targets are positioned around a controllable platform for the participants in the session and have permanent or temporary visual contact with the participants on the platform. Said controllable robotized targets are linked between themselves. through a control block (9) Each participant in the session by means of a communication devices can send at least two signals to the controllable robotized targets. The controllable platform, all controllable robotized targets, marks and communication devices are linked to a control block, operating all elements of the system according to predetermined algorithm.

The controllable robotized targets can change their position by means of robots and/or manipulators. Said controllable robotized targets are capable of reacting to the actions of the participants in the session by sound and/or beam and/or movement and/or fluids. The information-indicative background around each mark may be a color background and/or light background as well as may be a steady or blinking background. Said information-indicative background may be capable of change of the background intensity for a given period of time.

The controllable platform, where the participants in the session stand, may be mobile, as well as divided into separate mobile controllable zones capable of independent movements in the space between and/or amidst the targets, where every zone is linked to the control block.

The communication devices can emit signals, such as multicolored beam outgoing signals, upon pressure and/or sound and/or biometric data.

The communication devices are in the form of a blaster or submachine-gun or pistol or bazooka or sniper or grenade or fan or mantle or scepter or whip or truncheon or mace or basket or fruit or bowl or key or shoe or hat or flower or broom or spear or sword or knife or cane or umbrella or book or coin or tool such as hammer or screwdriver or file or saw or wrench or pliers or auger or yard-measure or scissors. Said communication devices may be mechanical recoil devices.

In a preferred embodiment of the invention the controllable robotized targets are positioned on and/or above and/or in front of and/or behind controllable sets, which represent walls of flat or relief form, placed vertically or slantingly or horizontally with respect to the controllable platform. Said controllable sets may be rendered in two to ten colors as well as may have individual marks with information-indicative background Said controllable sets may be built of separate components, which are arranged side by side and/or overlapping. Said controllable sets are linked to the targets and to the control block and are capable of changing their position.

In another preferred embodiment of the invention mobile controllable robotized barriers rendered as screens of different shape and/or as robots and/or animals and/or objects are placed around and above the controllable platform, said mobile controllable robotized barriers have visual contact with the participants on the platform and are linked to the control block as well as are supplied with sensors for reacting to pressure and/or sound and/or signal from the communication devices.

The controllable platform may be supplied with shields, connected two-way with the control block, and representing parapets equipped with sensors. Said shields are capable of moving and emitting sounds upon pressure and/or beam and/or sound. A shield may correspond to one zone of the platform or to a part of a zone or to more than two adjacent zones of the platform.

In another preferred embodiment of the invention near the controllable platform there is a stand with seats for audience, which is linked to the control block and may be divided into mobile controllable zones of different laws of motion with respect to each other. Each seat on the stand is equipped with a multimedia communication panel and an activating button for synchronization of the actions of part of the audience and a participant or participants in the session. Said multimedia communication panel is supplied with a terminal, including keyboard and monitor. In the said multimedia communication panel may be incorporated image targets, representing a multimedia screen and marks located around it.

According to the present invention, the system may be supplied with a pneumatic mail connecting the audience on the stands with the participants in the session for exchange of objects between part of the audience and one or more participants in the session. Every controllable robotized target, controllable set, controllable barrier and controllable stand may be supplied with a local control block, communicatively linked to the control block.

The control block may be equipped with a panel for manual control.

The control block may be linked to the control blocks of other systems for sport and entertainment by a common control block for exchange of multimedia information and data about the participants and their achievements.

When the systems for sport and entertainment are linked to a common control block they are capable of exchange of multimedia information in parallel sessions and periodic synchronous reshuffling of the controllable robotized targets, the controllable sets and the controllable barriers in each of the systems.

The system, according to the present invention, has the following advantages: Through mutually mobile targets and participants, psychomotor skills are built up, tested and improved in real environment, including team communication and communication with an audience. The time and quality of reaction of each participant is rated in the conditions of a dynamic game situation, of an unknown and unexpected effect from hitting the targets. The system, according to the present invention, affords an opportunity to realize an infinite number of game combinations, a wide range of thematic situations, surprises, incentives, various ranking of achievements and of cooperation, with a high degree of attractiveness. The system also provides for the participation of teams and team interaction within the framework of one or several systems, and makes possible the audience's participation in the and partnership with the participants by means of exchange of information and cooperation for interactive change of the situation, roles and missions by action of the audience on the direct participants, as well as action of the participants on the audience. Changing the targets regarding place, mission, response reaction and level stimulates the decision-making and participation for gaining control of objects (targets, marks, sets, barriers, shields) whereby high efficiency of the training is achieved in mastering desired or prescribed skills. It is also possible to change interactively the situation, roles and cases, according to the combination of actions on all objects in the system both by the participants and audience at any time and by other systems for entertainment.

### BRIEF DESCRIPTION OF THE DRAWINGS

The invention is illustrates by embodiments shown on the accompanying figures, where:
Fig. 1 is a functional scheme of the system, according to the invention.
Fig. 2 is a side view of a part of the elements of the system in Fig. 1.
Fig. 3 is a plan view of an embodiment of the invention with differentiated fields including a concentric stand the platform.
Fig. 4 - functional links between the elements of the system, according to the invention.
Fig. 5 - algorithm of operation of the control block of the system, according to the invention.

### DETAILED OF EMBODIMENTS OF THE INVENTION

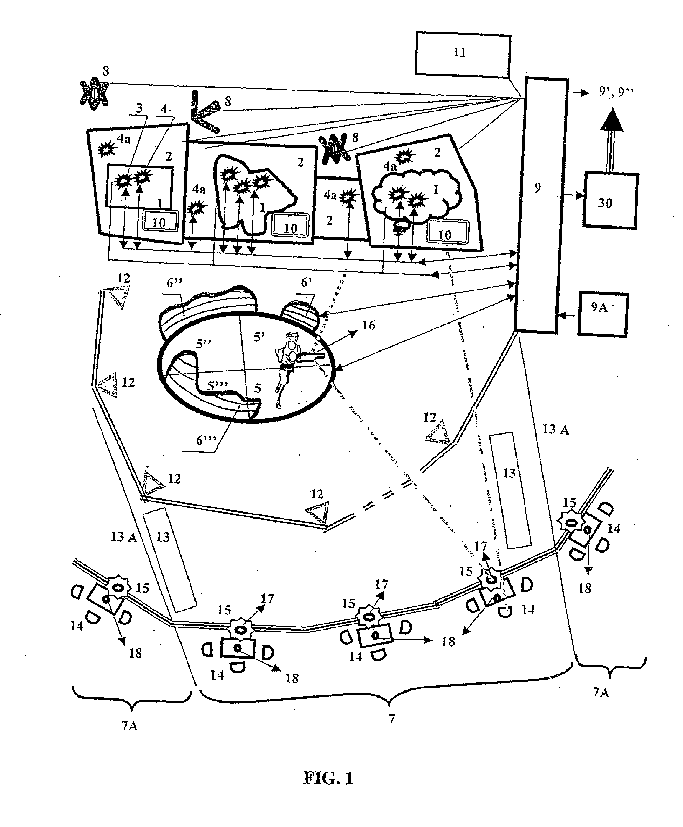

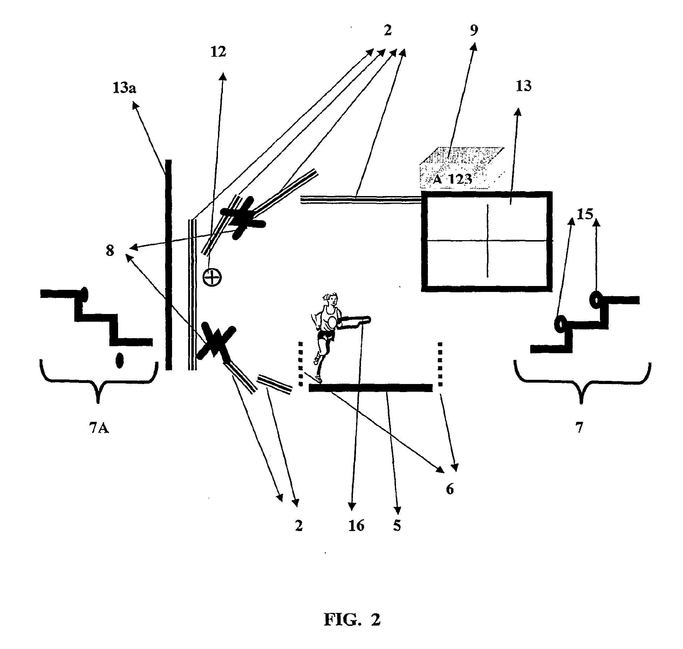

Fig. 1 and Fig. 2 show a functional scheme of the system, according to the invention, which consists of robotized controllable interactive targets 1, fixed on controllable interactive sets 2. The targets 1 have color marks 3, 4 with two-color light information-indicative background, for each mark. The targets 1 are positioned around a mobile controllable interactive platform 5 so that the marks on the targets 1 have permanent or temporary visual contact with the participants on the platform 5 and with a stand 7, located near the platform 5. All targets 1 and all color marks 3, 4 can be linked between themselves through a control block 9. The targets 1 can change their position with respect to the participants and the stand, driven by robots and/or manipulators (not shown in the figure). The number of the robotized targets is determined depending on the location of the system. If the system is indoors, the preferred number of targets is 1 to 1000. The number of targets in an outdoor system may be more than 1000.

In Fig. 1 are also shown individual marks 4a, supplied with information-indicative background, which have no targets.

The controllable targets 1 react in a synchronized and/or asynchronous way and are interactive with the participants according to the missions and team distribution by unpredictable actions: physical motion, speed, sound (music), color, heat, smell, speech in different languages, touch. On each target I is mounted an electronic label 10 indicating the achieved current level of hits on the target and the respective points and/or bonuses for correct hit.

The targets 1 are fixed to interactive controllable sets 2, representing walls of flat or relief form, placed vertically, slantingly or horizontally with respect to the platform. The sets may be built of separate components, which are arranged side by side and/or overlapping and/or concentrically. The controllable sets 2 have interactive color tracks (not shown in the figures) of different degrees of complexity, activated when they are crossed by a signal from the controllable communication devices. The controllable sets 2 or elements thereof may be rendered capable of changing their position.

Mobile controllable interactive barriers 8 are placed around the central mobile circular interactive platform 5 and around and/or above the targets 1 and the controllable sets 2 so that they have visual contact with the platform 5 and the stand 7. The barriers 8 are capable of synchronic and/or asynchronous reaction and are interactive with the participants. The barriers 8, apart from mechanical, can be electrical, hydraulic, pneumatic, sonic, gas, optical and combined, including rendered as curtains, restricted zones, smoke, smells, noise, lights, liquid, heat. They can be capable of reaction upon pressure and/or sound and/or beam and/or object.

The mobile circular platform 5 in this example of Fig. 1 is rendered as revolving, sliding and rising circle, but it can be of any other shape. It has differentiated mobile zones 5', 5", 5"', for the participants/teams, controllable according to the actions of the participants and the audience, having their proper color, which determines the team appurtenance. In the example in Fig. 1, the zones of the platform 5 are rendered as sectors, which are capable of movement together or separately in any direction, including with vibrations and with different laws of motion both with respect to the platform 5 and each other.

The platform 5 is supplied with mobile controllable interactive shields 6. In this example the shields 6', 6", 6"' in Fig. 1 are mechanical, reacting to touch and beam, rendered as mobile parapets. They may be sensitive also to shock or pressure or sound. In this example one of the shields 6' corresponds to and is adjoining part of one mobile zone 5' for a participant in the mobile circular platform 5. Another shield 6" encompasses parts of two adjacent sectors 5' and 5", a third shield 6"' corresponds to an entire sector 5"', where it is possible for a shield to encompass two or more sectors. The stand 7 of the system may be divided into mobile zones capable of synchronic and asynchronous movement. These mobile zones are equipped with terminals 15, representing a keyboard and monitor, and seats 14 for persons with active role for interaction with the participants in the sessions. The stand 7 is rendered at several levels, which is evident in Fig. 2. The seats 14 for persons with active role at the stand 7 have inbuilt activating buttons 18 with electronic menus. In the terminals 15 are incorporated image targets 17 and multimedia communication panel (not shown in the figures), electrically connected to the control block 9 and to each communication device 16.

In this example the communication devices 16, held by the participants in the session, are rendered as blasters with mechanical recoil and two color outgoing laser beams - blue and red, and are equipped with a microphone, speaker-earphones and biometric identifier (not shown in the figures) of the participant holding the device. These dialogue devices 16, located in the field of the platform, have visual contact with the marks 3, 4 on the targets 1, with the marks 4a on the sets 2, with the barriers 8 and the stand 7.

In another embodiment of the invention, the communication devices 16 can have multicolored outgoing signals, which correspond to a multicolored information-indicative background of the marks 3, 4, of aggregate impact according to the current situation, and can be rendered as a blaster or submachine-gun or pistol or bazooka or sniper or grenade or fan or mantle or scepter or whip or truncheon or mace or basket or fruit or bowl or key or shoe or hat or flower or broom or spear or sword or knife or cane or umbrella or book or coin or tool such as hammer or screwdriver or file or saw or wrench or pliers or auger or yard-measure or scissors.

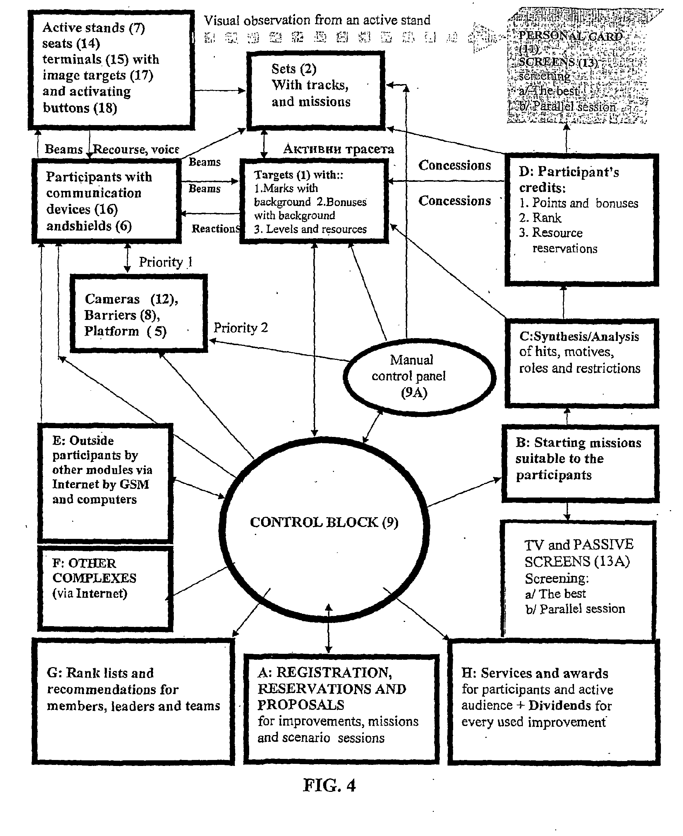

Fig. 4 shows a scheme of the functional links between the elements of the system.

A control block 9 is connected to the electrical or hydraulic or pneumatic or mechanical driving units of each target 1, of each set 2, of the barriers 8, of the shields 6, 6', 6", 6"', of the platform 5 and the stand 7. The control block 9 can be equipped with outer control panel 9A for independent manual or supplementary control of the parameters and/or reactions of the interactive elements of the system. To the control block 9 are connected also a board-personal card 11 of the results of each participant, recording cameras 12 and multimedia screens 13 for broadcasting sessions with achievements above a certain level. The mobile platform 5 and the shields 6 also have a two-way connection with the control block 9.

The communication devices 16, the targets 1, the platform 5, the stand 7 and the barriers 8 can be rendered capable of reaction to pressure, and/or sound, and/or beam, which sensitivity varies with time, space, participants rank and missions.

The control block 9 is communicatively linked to each communication device 16.

The control block 9 can be connected also to the control blocks of other systems for entertainment 9', 9" (fig 1) by indirect visual contact with their playground by a system of cameras, screens and communication media (3G, Internet or other) for the exchange of multimedia information and data of the participants and their achievements. When the systems for entertainment are connected by a common control block 30, they are capable of periodic synchronous reshuffling of the targets, sets and barriers in each of the systems.

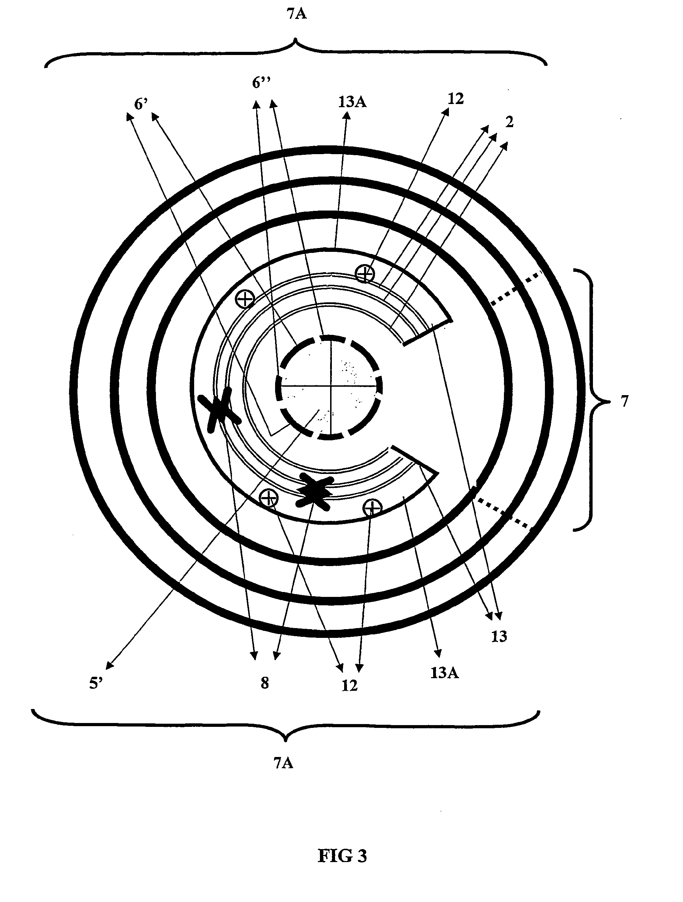

The system, according to the present invention, can be situated in outdoor, semi-outdoor and indoor premises. In the indoor variant, the stand may be adjacent but outside the premises, and in this case it is a completely passive stand 7A and the audience can watch the sessions on a screen. If the stand is within the premises and has direct visual contact with the platform 5, it is an active stand and the persons occupying the seats 14 on it have an active role for interaction and joint reactions with the participants in the session. Parts of the premises (for example, a wall) where the system is located is designed as a screen 13A for passive observation of the current session in it or of interesting sessions in other systems, as shown in Fig. 1 and Fig. 3. The screens 13A provide outside passive observation of sessions to the attendants at the passive part of the stand 7A, while the screens 13 provide parallel active observation together with the direct observation of the session underway and the participation in it by the audience with active role at the active part of the stand 7 with direct visibility. Fig. 3 shows a revolving stand 7 at three levels, situated concentrically around the platform 5, the sets 2 and the targets 1.

In the semi-outdoor variant, part of the stand 7 can have direct visual contact (see Fig. 1) with the ground and the participants in the session and this part of the stand is active. The operation of the system, according to the present invention, is based on the interaction of the communication devices 16, controlled by the participants in the session by pressure and/or sound and/or beams, with the marks 3, 4, 4a, the targets 1, the sets 2, the barriers 8 and the audience. Each participant or team from their own zone activates one or more signals, which according to their interaction with the information-indicative background are received by the marks 3, 4, 4a and the number of signals received for a certain time by each mark in keeping with the background form cumulative resources - points and bonuses, depending on the overcome levels of complexity, speed and precision. The cumulative resources, according to a prescribed mission of the session, are directed for temporary reservation of a given target and/or for conquering a target already reserved by another participant or team, as well as for maintenance of a given target in a defined final state when it has reached maximum level of complexity. The number and potential of the targets in defined final state secure resources for a given participant or team.

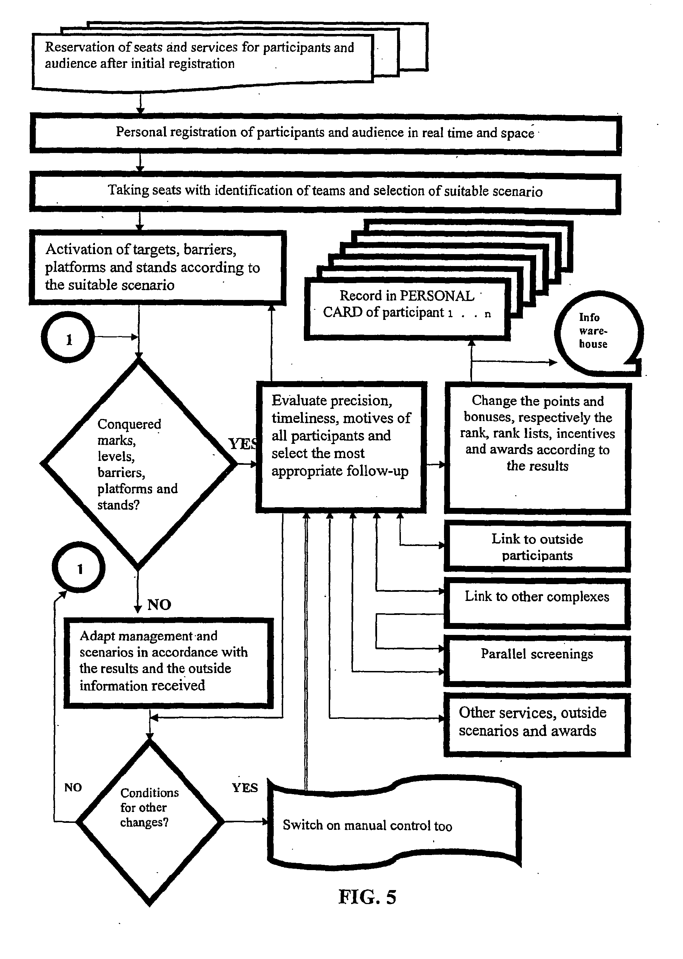

Fig. 5 shows an algorithm of the operation of the control block 9 of the system, which does not limit the invention.

When the invention is used for sport, relaxation and/or simulation, after a possible reservation of time and place for participation, the following opportunities are given:
- 1.: Registration as participant on site or via Internet;
- 2.: Registration as audience;
- 3.: Registration as indirect audience, who can play by GSM, computer and Internet under certain conditions.
- 4.: Reservation of time and place, directly or from a distance, for each of the above roles.

The participants-shooters at the platform 5 select a communication device 16. Depending on their qualification, the number of teams and the desires of the participants at any time, the control block 9 starts one or several suitable missions.

Each mark 3, 4, 4a has a background, which by its color indicates when and with which beam the participant should communicate in order to achieve success. The time when the background is shining in one color determines the period in which dialogue with the respective beam color is possible. Hitting with the wrong beam (e.g. blue beam on a mark of red background) leads to taking off points or other sanctions, where the sound background indicates right or wrong hit of this mark.

In backgrounds of three or four colors there can be an additional intermediary background, showing that the mark/target has been reserved by a participant and only this participant can shoot with the color closest to the intermediary.

According to the participants' hits, the targets 1 pass onto different levels, which determine different laws of motion, organization of the marks 3, 4 borne by them and response reaction. Every next level requires speedier and more coordinated team reaction to go to the following level, and gives a greater number of points and bonuses to the participants for successful hits and/or overcome levels. Each level generates points and bonuses, which can be accumulated, directed and placed at the service of some mission. The targets 1 are temporarily reserved by one participant and/or team, called Titular. If the titular fails to pass some level for a given time and resource, the target temporarily remains "nobody's", which is signaled appropriately. In the event of quick reaction on the part of other participants, the target is taken without going back to starting zero position, and the new titular receives the available points, multiplied by a coefficient. The targets are equipped with electronic memory for the last n-number of participants with best achievements. Reaching maximum level, the targets 1 fall into resonance, which is easy to maintain under certain conditions, allowing their titular to generate and direct the resource of the target 1 by the sets 2 in a desired direction according to the current missions, which are announced by the multimedia in the system according to the invention. By the sets 2 the resources from several targets can be pooled and directed for the purpose of aggression or cooperation in various parts of the system. The sets 2 have light and/or color tracks, which are activated to trace a path or route for transference, pooling or blocking of resources between different targets in resonance. When activated, the sets become routes for transference, pooling or blocking of the resources generated by one or several participants at a different time and different place in the system. Basic parameters for activation of an element are: the period of activation; price (resource) for activation; titular, who is entitled to activate the set within the respective time; state of the adjacent elements and/or targets.

The sets 2 have electronic memory and can be activated (like an alarm clock) at a selected time, mission and/or scenario, according to the priorities and potential of the respective participants.

In an exemplary variant, the play of a part of participants may go off in the following way: Taking his stand in the reserved/prepaid zone, the participant hits a mark on a particular target with a suitable beam and thus temporarily reserves this target to himself, i.e. becomes its titular. If this player fails to hit the respective marks within the time provided for the respective level, he loses the privilege. If in the provided time he hits all marks with specific kinds of beams, required by the information-indicative background, he passes from level 1 to level 2. In this way, by timely full hits with red and blue beams within the time provided for each level, the participant passes from one level onto the next. At every higher level the target moves according to ever more complex laws, where under certain conditions the actions of the participant may be further hindered by the motion of the platform, the zones and/or the reactions of the barriers. In the process of dialogue between the participant and the target, the label of each target shows the respective level and number of points or bonuses, which the participant would achieve in the event of a successful hit. If all marks of the last level are hit, the target falls into resonance and starts generating resource for its titular. The activation of the adjacent sets, through the respective marks 4a, traces a resource route which directs this resource to the execution of missions or to other targets, which are to be activated and brought to resonance too. Upon hindrances, the participant may team up with other players with view to joint, more efficient actions and pooling of resources. The active sets build up resource routes, which pool the resource from all resonance targets and participants in the team and direct it to the achievement of the current missions, announced by the system or arising from the actions of the other participants. Every target and scenario remembers their conquerors, and the best achievements over a certain period of time are announced as records in the respective rank lists.

A blinking background, which in some cases may be accompanied by a synchronous sound, shows to the participants and the audience that the respective target is no longer under the control of a titular and anybody else can become titular by a successful hit. Such quick reaction brings a number of advantages to the new titular.

The shields 6, 6', 6", 6'" protect the participants from the barriers 8, which represent various installations and effects, which attack the participants under certain conditions with the aim of hindering them and/or taking off points. The barriers 8 attack according to the participants' reactions and the selected scenario. To overcome a barrier attack requires adequate reaction on the part of the threatened participants, and their team respectively. The barriers 8 can be deactivated and/or redirected in time and space according to the participants' skills and rank. For example, a barrier springs up in front of a participant, and if he does not take care of it (e.g. by timely providing the required resource), the mission changes into a more harmonious variant, whereas if his reaction is rough or frantic, the mission turns towards a more critical development.

When part of the stand has direct visual contact to the system interior (the playground) with participants in the session, this part of the stand is active - the persons, audience, present on the stand have active role for multimedia interaction and joint reactions concerning the marks 3, 4 of the targets 1, the individual marks 4a and the screen of the electronic image targets 15, which is related to prize objects, images and texts and is inbuilt in the platform. The image targets 15 are used for awarding one or more members of the active audience by the participants. The active audience supports or awards the participants by objects sent via the pneumatic mail (not shown in the figures). The pneumatic mail carries real objects and resource between the audience and the participants both ways.

When part of the stand 7 loses its direct visual contact with the playground, this part of the stand becomes passive stand 7A and the persons, audience, present on it, acquire one-sided audiovisual contact as observers of the session via the screens 13A. Depending on the session scenarios, on the screens 13 and 13A are shown synchronously different parallel sessions, conducted concurrently with the current session in the system, according to the present invention, or the best achievements recorded to the moment from all systems, reproduced simultaneously with the current session.

Fig. 4 shows an algorithm of the operation of the control block.

Depending on the session scenario, by the control block 9 are activated the missions and the targets 1 in a preset sequence, in order to provide to the participants conditions for reaction, respectively for evaluation and development of their psychomotor, leadership and team qualities.

The scenario according to the set mission may be of a single or multiple versions, independent or supplemented according to reactions manifested by the participants. The participants' achievements by the communication devices 16 are reflected in points and bonuses, which form rank and results from the current session; they are displayed on the electronic screens-personal cards 11 - personal for each participant, and are visible for the active part of the stand 7. In the course of the session, the control block 9 announces the arising missions by way of multimedia or by the communication devices 16 to each participant and/or team.

The situating of the system, according to the present invention, in public sites such as halls, stadiums, parks, housing estates, stations, stops etc. allows for anonymous or identified participation of a broad circle of people in real time through direct intervention, GSM and computer.

The system, according to the present invention, can be used for sport, entertainment and recreation, for testing, cultivating or training of psychomotor, team, leadership and business qualities in the participants in the session.

## Claims

1. A system for sport and entertainment, which includes targets, a control block and communication devices used by the participants in a session, **characterized in that** the targets are controllable robotized targets (1), each of which has at least one mark (3, 4), surrounded by an information-indicative background, where the controllable robotized targets (1) are positioned around a controllable platform (5) for the participants and have permanent or temporary visual contact with the participants on the platform (5) and said controllable robotized targets (1) are linked between themselves through a control block (9), where each participant in the session by means of a communication device (16) can send at least two signals in the form of colored beam to the controllable robotized targets (1), and the controllable platform (5), all controllable robotized targets (1), marks (3, 4) and communication devices (16) are linked to said control block (9), operating all elements of the system according to predetermined algorithm.

2. A system according to claim 1, **characterized in that** the controllable robotized targets (1) can change their position by means of robots and/or manipulators and said controllable robotized targets (1) are capable of reacting to the actions of the participants in the session by sound and/or beam and/or movement and/or fluids.

3. A system according to claim 1, **characterized in that** the information-indicative background around each mark (3, 4) may be a colour background and/or light background as well as may be a steady or blinking background and said information-indicative background may be capable of change of the background intensity for a given period of time.

4. A system according to claim 1, **characterized in that** the controllable platform (5), where the participants in the session stand, may be mobile, as well as divided into separate mobile controllable zones (5', 5", 5"') capable of independent movements in the space between and/or amidst the targets (1), where every zone is linked to the control block (9).

5. A system according to claim 1, **characterized in that** the communication devices (16) can emit signals, such as multicolored beam outgoing signals, upon pressure and/or sound and/or biometric data.

6. A system according to claims 1 and 5, **characterized in that** the communication devices (16) are in the form of a blaster or submachine-gun or pistol or bazooka or sniper or grenade or fan or mantle or scepter or whip or truncheon or mace or basket or fruit or bowl or key or shoe or hat or flower or broom or spear or sword or knife or cane or umbrella or book or coin or tool such as hammer or screwdriver or file or saw or wrench or pliers or auger or yard-measure or scissors, and said communication devices (16) may be mechanical recoil devices.

7. A system according to claims 1 and 2, **characterized in that** the controllable robotized targets (1) are positioned on and/or above and/or in front of and/or behind controllable sets (2), which represent walls of flat or relief form, placed vertically or slantingly or horizontally with respect to the controllable platform (5) and said controllable sets may be rendered in two to ten colors as well as may have individual marks (4a) with information-indicative background and said controllable sets (2) may be built of separate components, which are arranged side by side and/or overlapping, where said controllable sets (2) are linked to the targets (1) and to the control block (9) and are capable of changing their position.

8. A system according to claims 1 and 4, **characterized in that** mobile controllable robotized barriers (8) rendered as screens of different shape and/or as robots and/or animals and/or objects are placed around and above the controllable platform (5), said mobile controllable robotized barriers (8) have visual contact with the participants on the platform (5) and are linked to the control block (9) as well as are supplied with sensors for reacting to pressure and/or sound and/or signal from the communication devices (16).

9. A system according to claims 1 and 4, **characterized in that** the controllable platform (5) is supplied with shields (6, 6', 6", 6"'), connected two-way with the control block (9), and representing parapets equipped with sensors, and said shields (6, 6', 6", 6"') are capable of moving and emitting sounds upon pressure and/or beam and/or sound, where a shield (6) may correspond to one zone (5', 5", 5"') of the platform (5) or to a part of a zone or to more than two adjacent zones (5' and 5") of the platform (5).

10. A system according to claims 1, 4, 8 and 9, **characterized in that** near the controllable platform (5) there is a stand (7) with seats for audience (14), which is linked to the control block (9) and may be divided into mobile controllable zones of different laws of motion with respect to the stand (7) and each other, wherein each seat on the stand (7) is equipped with a multimedia communication panel and an activating button (18) for synchronization of the actions of part of the audience and a participant or participants in the session and said multimedia communication panel is supplied with a terminal (15), including keyboard and monitor, as well as in the said multimedia communication panel may be incorporated image targets (17), representing a multimedia screen and marks located around it.

11. A system according to claims 1, 4 and 10, **characterized in that** the system is supplied with a pneumatic mail connecting the audience on the stands (7) with the participants in the session for exchange of objects between part of the audience and one or more participants in the session.

12. A system according to each of the preceding claims 1 to 11, **characterized in that** every controllable robotized target (1), controllable set (2), controllable barrier (8) and controllable stand (7) is supplied with a local control block, communicatively linked to the control block (9).

13. A system according to claim 1, **characterized in that** the control block (9) is equipped with a panel for manual control (9A).

14. A system according to claim 1, **characterized in that** the control block (9) is linked to the control blocks (9', 9") of other systems for sport and entertainment by a common control block (30) for exchange of multimedia information and data about the participants and their achievements.

15. A system according to claims 1 and 14, **characterized in that** when the systems for sport and entertainment are linked to a common control block (30) they are capable of exchange of multimedia information in parallel sessions and periodic synchronous reshuffling of the controllable robotized targets (1), the controllable sets (2) and the controllable barriers (8) in each of the systems.

## Patentansprüche

1. Ein System für Sport und Unterhaltung, die Zielscheiben, Steuerblock und Kommunikationsgeräte, die von der Teilnehmern an der Sitzung verwendet wird beinhaltet, zeichnet sich **dadurch** aus, dass die Zielscheiben gesteuerte robotisierte Zielscheiben (1) sind, jeder von denen mindestens ein Ziel (3, 4), das von informationsvorsagendem Hintergrund umgegeben ist, besitz und die gesteuerte robotisierte Zielscheiben (1) sind um ein gesteuertes Podium (5) für die Teilnehmer gelegt und haben einen ständigen oder vorläufigen Sichtkontakt mit den Teilnehmern auf dem Podium (5) und die gesteuerte robotisierte Zielscheiben (1) sind durch einen Steuerblock (9) verbunden und jeder Teilnehmer an der Sitzung kann mindestens zwei Signale in Form von Farbstrahl zu den gesteuerten robotisierten Zielscheiben (1) und dem gesteuerten Podium (5) durch eine Kommunikationsgerät (16) senden, alle gesteuerte robotisierte Zielscheiben (1), Ziele (3, 4) und Kommunikationsgeräte (16) sind durch den Steuerblock (9), das alle Elemente des Systems nach einem vorgegebenen Algorithmus verwaltet, verbunden.

2. Ein System nach dem Anspruch 1 zeichnet sich **dadurch** aus, dass die gesteuerte robotisierte Zielscheiben (1) seine Position durch Roboter und/oder Handhabungsgeräte ändern können und diese gesteuerte robotisierte Zielscheiben (1) haben die Möglichkeit, auf die Aktionen der Teilnehmer an der Sitzung durch Ton und/oder Strahl und/oder Bewegung und/oder Fluida reagieren.

3. Ein System nach dem Anspruch 1 zeichnet sich **dadurch** aus, dass den informationsvorsagende Hintergrund um jedes Ziel (3, 4) ein Farb- und/oder Lichthintergrund, sowie ein ständigen oder flackernden Hintergrund werden kann und auch kann dieser Hintergrund die Intensität für eine gegebene Zeitperiode ändern.

4. Ein System nach dem Anspruch 1 zeichnet sich **dadurch** aus, dass dem gesteuerten Podium (5), an dem die Teilnehmer sind, beweglich sein kann und kann auf abgesonderte bewegliche gesteuerte Zonen (5', 5", 5"') geteilt werden, die die Möglichkeit um individuelle unabhängige Bewegungen zwischen und/oder inmitten den Zielscheiben (1) verrichten und jede Zone ist mit dem Steuerblock (9) verbunden.

5. Ein System nach dem Anspruch 1 zeichnet sich **dadurch** aus, dass die Kommunikationsgeräte (16) vielfarbige strahlige Ausgangssignale bei einem Druck und/oder Ton und/oder Biometriedaten ausstrahlen können.

6. Ein System nach den Ansprüche 1 und 5 zeichnet sich **dadurch** aus, dass die Kommunikationsgeräte (16) in Form von Blaster oder Automat oder Pistole oder Panzerfaust oder Zielfernrohr oder Granate oder Fächer oder Umhang oder Stab oder Peitsche oder Knüppel oder Morgenstern oder Korb oder Frucht oder Schüssel oder Schlüssel oder Schuh oder Hut oder Blume oder Besen oder Speer oder Schwecht oder Messer oder Stock oder Schirm oder Buch oder Münze oder technisches Werkzeug, z. B. Hammer oder Schraubenzieher oder Feile oder Säge oder Zange oder Schraubenschlüssel oder Bohrer oder Metermaß oder Schere sind und diese Kommunikationsgeräte (16) können mechanische Rückstoßgeräte sein.

7. Ein System nach den Ansprüche 1 und 2 zeichnet sich **dadurch** aus, dass die gesteuerte robotisierte Zielscheiben (1) auf und/oder über und/oder vor und/oder hinter und/oder gesteuerte Dekors (2) positioniert sind, die einige Wände mit glattem oder reliefartigem Form, die in einer vertikalen, geneigten oder horizontalen Haltung in bezug auf dem gesteuerten Podium (5) gestellt sind und diese gesteuerte Dekors (2) können in zwei bis zehn Farben sein und selbstständige Ziele (4a) mit informationsvorsagendem Hintergrund besitzen und die gesteuerte Dekors (2) können aus einzelne Elemente, die hintereinander und/oder übereinander angeordnet sind, ausgebaut werden, indem die gesteuerte Dekors (2) mit den Zielscheiben (1) und dem Steuerblock (9) verbunden sind und können seine Position ändern.

8. Ein System nach den Ansprüche 1 und 4 zeichnet sich **dadurch** aus, dass die bewegliche gesteuerte robotisierte Schranken (8), als Sperren mit verschiedenem Form und/oder Roboter und/oder Tiere und/oder Gegenstände ausgebaut sind, die um und über das gesteuerte Podium (5) gestellt sind und diese bewegliche gesteuerte robotisierte Schranken (8)ein Sichtkontakt mit den Teilnehmer an dem Podium (5) haben und sind mit dem Steuerblock (9) verbunden und besitzen einige Geber, die auf einem Druck und/oder Schall und/oder den Signalen von den Kommunikationsgeräte (16) reagieren.

9. Ein System nach den Ansprüche 1 und 4 zeichnet sich **dadurch** aus, dass das gesteuerte Podium (5) einige Schilde (6, 6', 6", 6"') besitzt, die zweiseitig mit dem Steuerblock (9) verbunden sind und sind einige Geländer mit Geber und diese Schilde (6, 6', 6", 6"') können verschieben und einen Laut von sich unter einem Druck und/oder Strahl und/oder Schall geben, indem ein Schild (6) zu einer Zone (5', 5", 5"') oder eines Teils der Zone oder mehr als zwei benachbarte Zonen (5' und 5") des Podiums (5) entsprechen kann.

10. Ein System nach den Ansprüche 1, 4, 8 und 9 zeichnet sich **dadurch** aus, dass in der Nähe von dem gesteuerten Podium (5) eine Tribüne (7) mit Sitzplätze für das Publikum (14) gibt, die ist mit dem Steuerblock (9) verbunden ist und kann auf bewegliche gesteuerte Zonen mit verschiedenen Bewegungsgesetze in bezug auf der Tribüne (7) und dazwischen aufteilen und jeder Sitzplatz ist mit einer Kommunikationstafel für eine Multimedienverbindung und einer Taste (18) für Synchronisierung der Aktionen des Publikums und einer Teilnehmer oder Teilnehmer an der Sitzung eingerichtet und die Kommunikationstafel ist mit einem Terminal (15), inkl. Tastatur und Bildschirm eingerichtet und in dieser Kommunikationstafel können verschiedene Bildzielscheiben (17), die ein Schild und Ziele erscheinen, inkorporieren.

11. Ein System nach den Ansprüche 1, 4 und 10 zeichnet sich **dadurch** aus, dass das System mit einer pneumatischer Post eingerichtet ist, die das Publikum an der Tribüne (7) mit den Teilnehmer an der Sitzung für die Verschiebung von Gegenstände zwischen einem Teil des Publikums und einen oder mehreren Teilnehmer an der Sitzung verbindet.

12. Ein System nach allen Ansprüche von 1 bis 11 zeichnet sich **dadurch** aus, dass jede gesteuerte robotisierte Zielscheibe (1), gesteuertes Dekor (2), gesteuerte robotisierte Schranken (8) und gesteuerte Tribüne (7) mit einem lokalen Steuerblock eingerichtet ist, der mit dem Steuerblock (9) verbunden ist.

13. Ein System nach dem Anspruch 1 zeichnet sich **dadurch** aus, dass den Steuerblock (9) mit einer Handbedienungspult (9A) eingerichtet ist.

14. Ein System nach dem Anspruch 1 zeichnet sich **dadurch** aus, dass den Steuerblock (9) mit den Steuerblöcke (9', 9") anderer Sport- und Unterhaltungssystemen durch einen gemeinsamen Steuerblock (30) für den Austausch von Multimediainformation und Daten bezüglich den Teilnehmer und ihre Ergebnisse, verbunden ist.

15. Ein System nach den Ansprüche 1 und 14 zeichnet sich **dadurch** aus, dass wenn die Sport-und Unterhaltungssystemen mit einem gemeinsamen Steuerblock (30) verbunden sind, können sie eine Multimediainformation in Parallelsitzungen austauschen und eine periodische synchrone Verschiebung gesteuerten robotisierten Zielscheiben (1), gesteuerten Dekors (2) und den gesteuerten robotisierten Schranken (8) in jedem System erschaffen.

## Revendications

1. Un système de sport et loisirs qui inclut des cibles, bloc de contrôle et appareils de communication, utilisés par les participants à une session, **se caractérisant par** cela que les cibles représentent des cibles robotisées contrôlables (1), chacune desquelles a au moins un but (3, 4), entouré par un fond d'information et suggérant les cibles robotisées contrôlables (1) étant situées autour un podium contrôlable (5) pour les participants et il y a un contact visuel permanent ou temporaire avec les participants du podium (5) et les cibles robotisées contrôlables (1) sont liées entre elles au moyen de bloc de contrôle (9), et tout participant à la session au moyen d'un appareil de communication (16) peut envoyer au moins deux signales sous la forme de rayon de couleur aux cibles robotisées contrôlables (1) et au podium contrôlable (5), toutes les cibles robotisées contrôlables (1), les cibles (3, 4) et les appareils de communication (16) sont liés avec le bloc de contrôle susmentionné (9), qui contrôle tous les éléments du système selon un algorithme prédéterminé.

2. Système conformément à la revendication 1, **se caractérisant par** cela que les cibles robotisées contrôlables (1) peuvent changer leur position au moyen de robots et/ou manipulateurs et ces cibles robotisées contrôlables (1) sont capables de réagir aux actions des participants à la session par son et/ou rayon et/ou mouvement et/ou fluides.

3. Système conformément à la revendication 1, **se caractérisant par** cela que le fond d'information et suggérant autour toute cible (3, 4) peut être un fond de couleurs et/ou un fond de lumière, ainsi qu'il peut être un fond stable ou bien clignotant et ce fond d'information et suggérant est capable de changer l'intensité de fond pour une période de temps déterminée.

4. Système conformément à la revendication 1, **se caractérisant par** cela que le podium contrôlable (5), auquel se trouvent les participants à la session, peut être mobile, ainsi que divisé en zones isolées mobiles contrôlables (5', 5", 5"'), capables de différents mouvements indépendants dans l'espace entre et/ou parmi les cibles (1), toute zone étant liée au bloc de contrôle (9).

5. Système conformément à la revendication 1, **se caractérisant par** cela que les appareils de communication (16) peuvent émettre des signaux, comme des signaux sortants de rayons multicolores en cas de pression et/ou de son et/ou de données biométriques.

6. Système conformément aux revendications 1 et 5, **se caractérisant par** cela que les appareils de communication (16) sont sous la forme de fusil blaster ou mitraillette ou pistolet ou bazooka ou bien fusil de précision ou grenade ou éventail ou pèlerine ou bâton ou fouet ou baguette ou masse d'arme ou panier ou fruit ou écuelle ou clé ou chaussure ou chapeau ou fleur ou balai ou lance ou épée ou couteau ou bâton ou parapluie ou livre ou monnaie ou instrument technique par exemple marteau ou tournevis ou lime ou scie ou tenailles ou clé à écrou ou foret ou mètre ou ciseaux et ces appareils de communication (16) peuvent être des appareils mécanique de recul.

7. Système conformément aux revendications 1 et 2, **se caractérisant par** cela que les cibles robotisées contrôlables (1) sont positionnées sur et/ou au-dessus et/ou au-devant et/ou derrière des décors contrôlables (2), qui représentent des murs d'une forme plate ou en relief, situés verticalement ou obliquement ou horizontalement par rapport au podium contrôlable (5) et ces décors contrôlables peuvent être réalisés en deux jusqu'à dix couleurs et avoir de cibles individuels (4a) avec un fond d'information et suggérant et les décors contrôlables (2) peuvent être construits par components isolés, arrangés l'un à côté de l'autre et/ou se chevauchant, les décors contrôlables (2) étant liés aux cibles (1) et au bloc de contrôle (9) et ils peuvent changer leur position.

8. Système conformément aux revendications 1 et 4, **se caractérisant par** cela que les barrières mobiles robotisées contrôlables (8), sont réalisées comme des obstacles de forme différente et/ou comme robots et/ou animaux et/ou objets, mis autour et au-dessus du podium contrôlable (5), ces barrières mobiles robotisées contrôlables (8) ayant un contact visuel avec les participants du podium (5) et étant liées au bloc de contrôle (9), ayant aussi des capteurs pour réagir à la pression et/ou au son et/ou au signal par les appareils de communication (16).

9. Système conformément aux revendications 1 et 4, **se caractérisant par** cela que le podium contrôlable (5) a des boucliers (6, 6', 6", 6"'), liés bilatéralement au bloc de contrôle (9), représentant des parapets, équipés de capteurs et ces boucliers (6, 6', 6", 6"') sont capables de se mouvoir et d'émettre des sons sous pression et/ou rayon et/ou son, un bouclier (6) pouvant correspondre à une zone (5', 5", 5"') du podium (5) ou bien à une partie d'une zone ou à plus de deux zones adjacentes (5' et 5") du podium (5).

10. Système conformément aux revendications 1, 4, 8 et 9, **se caractérisant par** cela que près du podium contrôlable (5) il y a une tribune (7) avec des places pour le public (14), liée au bloc de contrôle (9) et elle peut être divisée en zones mobiles contrôlables de différentes lois de mouvement par rapport à la tribune (7) et parmi elles et toute place de la tribune (7) est équipée de pupitre de communication pour connexion multimédia et de bouton d'activation (18) pour la synchronisation des actions entre une partie du public et un participant ou des participants à la session et ce pupitre de communication pour connexion multimédia est équipé d'un terminal (15), comprenant un clavier et un moniteur et dans le même pupitre de communication pour connexion multimédia peuvent être incorporés des cibles en image (17) représentant un écran multimédia et des cibles, situés autour de lui.

11. Système conformément aux revendications 1, 4 et 10 **se caractérisant par** cela que le système est équipé de poste pneumatique qui lie le public sur les tribunes (7) avec les participants à la session dans le but d'échange d'objets entre une partie du public et un ou plusieurs participants à la session.

12. Système conformément chaque des revendications précédentes de 1 à 11, **se caractérisant par** cela que toute cible robotisée contrôlable (1), tout décor contrôlable (2), toute barrière contrôlable (8) et toute tribune contrôlable (7) sont équipés de bloc de contrôle local, lié par communication au bloc de contrôle (9).

13. Système conformément à la revendication 1, **se caractérisant par** cela que le bloc de contrôle (9) est équipé de pupitre de contrôle manuel (9A).

14. Système conformément à la revendication 1, **se caractérisant par** cela que le bloc de contrôle (9) est lié aux blocs de contrôle (9', 9") des autres systèmes de sport et loisirs au moyen d'un bloc de contrôle commun (30) pour l'échange d'information et des données multimédia relatifs aux participants et leurs résultats.

15. Système conformément à la revendication 1 et 14 **se caractérisant par** cela que quand les systèmes de sport et loisirs sont liés par un bloc de contrôle commun (30) ils peuvent changer d'information multimédia en sessions parallèles et en déplacement périodique synchronique des cibles robotisées contrôlables (1), des décors contrôlables (2) et des barrières contrôlables (8) dans chaque système.
